# EUROPEAN PATENT SPECIFICATION

(11) **EP 3 880 500 B1**
(45) Date of publication and mention of the grant of the patent: **25.01.2023**
(21) Application number: 19836142.0
(22) Date of filing: 11.11.2019
(51) Int. Cl.: B60H 1/00, B60H 1/32, B60P 3/20

(54) **ELECTRIC POWERED REAR-MOUNTED TRANSPORTATION REFRIGERATION UNIT**
ELEKTRISCH ANGETRIEBENE HECKMONTIERTE TRANSPORTKÜHLEINHEIT
UNITÉ DE RÉFRIGÉRATION ÉLECTRIQUE DE TRANSPORT MONTÉE À L'ARRIÈRE

(30) Priority: 16.11.2018 US 201862768288 P
(43) Date of publication of application: 22.09.2021
(73) Proprietor: Carrier Corporation, Palm Beach Gardens, FL 33418 (US)
(72) Inventor: SAROKA, Mary D., Palm Beach Gardens, Florida 33418 (US)
(74) Representative: Dehns
(86) International application number: PCT/US2019/060693
(87) International publication number: WO 2020/102061

(56) References cited:
- DE-A1-102014 016 939
- US-A- 5 123 258
- US-B1- 8 807 628

## Description

The present invention relates to a split trailer refrigeration unit for a tractor trailer, as well as to a method for refrigerating a tractor trailer. The invention herein relates more specifically to a rear mounted electric powered transportation refrigeration unit for tractor trailers.

Tractor trailers for carrying refrigerated goods typically include a refrigeration unit mounted to the front of the trailer and positioned between the tractor and the trailer. The refrigeration units typically include a diesel, or other fossil fuel, powered generator that provides operational power to the refrigeration unit, allowing the trailer to be maintained at a cool or cold temperature.

Recent tractor trailer constructions have redesigned the tractors and/or the trailers in order to reduce drag on the vehicle and increase the efficiency of the vehicle. The redesigns include features such as fairings extending from the rear sides, top, or both of the tractor toward the front of the trailer, and a reduction in the length of the gap between the tractor and the trailer and the use of boat tail extensions from the rear of the trailer.

DE 10 2014 016939 discloses a cooling system for a transport unit such as a trailer or transport container, wherein the cooling system has at least two identically constructed cooling circuit modules that can be connected and disconnected to adapt the refrigeration capacity to the load requirements of the transport unit.

Viewed from a first aspect, the invention provides a split trailer refrigeration unit for a tractor trailer according to claim 1, wherein the split refrigeration unit includes: a first portion including an electrically driven compressor, a condenser and an evaporator, the first portion being sized to independently refrigerate the trailer; a second portion, the second portion including an electrically driven compressor, a condenser and an evaporator, the second portion being sized to independently refrigerate the trailer; both of the first portion and the second portion including a respective set of power electronics connecting a respective electricity source to the corresponding electric compressor, each set of power electronics being configured to control power characteristics of power provided from the electricity source to the electric compressor; a frame configured to structurally mount each of the first portion and the second portion to a rear trailer door; and a controller configured to operate the first portion in an electrical storage unit charging operation and the second portion in a refrigeration operation during a first mode, and configured to operate the second portion in the electrical storage unit charging operation and the first portion in the refrigeration operation during a second mode.

Optionally, the electricity source(s) is at least one of an electrical storage unit and a power interface connected to an external power source.

Optionally, the electricity source(s) includes both the electrical storage unit and the power interface connected to the external power source.

Optionally, the frame is integral to a trailer door and wherein a trailer door latch is a component of the frame.

Optionally, the frame is mountable to a trailer door and distinct from the trailer door.

Optionally, the controller is configured to transition from the first mode to the second mode in response to the electrical storage unit in the second portion falling below a charge threshold.

Optionally, an external skin covers at least one of the first portion and the second portion.

Optionally, the external skin comprises a first aerodynamic component covering the first portion and a second aerodynamic component covering the second portion.

Optionally, the external skin has an aerodynamic profile including one of an angular planar configuration, hemispherical curved configuration and a teardrop configuration.

Viewed from a second aspect, the invention provides an exemplary method for refrigerating a tractor according to claim 12, that includes powering at least one portion of a rear mounted refrigeration unit via an electrical power source and operating the at least one portion of a rear mounted refrigeration unit in a refrigeration mode, wherein powering the at least one portion of the rear mounted refrigeration unit comprises providing power to a first portion of the at least one portion during a first mode of operations and charging an electrical storage unit of a second portion of the at least one portion during the first mode of operations; providing power to the second portion of the at least one portion during a second mode of operations and charging an electrical storage unit of the first portion of the at least one portion during the second mode of operations; and transitioning from the first mode of operations to the second mode of operations, in response to an electrical storage unit in the first portion falling below a threshold charge level.

In another example the above described exemplary method for refrigerating a tractor trailer powering the at least one portion of the rear mounted refrigeration unit via the electrical power source comprises simultaneously powering a first portion and a second portion of the rear mounted refrigeration unit via the electrical power source, wherein each of the first portion and the second portion are substantially identical.

In one exemplary embodiment a tractor trailer vehicle includes a tractor including a plurality of fairings extending rearward from a rear end of the tractor, a trailer connected to the tractor, wherein a gap between the rear end of the tractor and a forward end of the trailer is less than 43 inches, and a rear mounted refrigeration unit as described above connected to a rear end of the trailer via the frame, wherein the rear mounted refrigeration unit including a first portion including an electrically driven compressor, a condenser and an evaporator, a second portion, the second portion including an electrically driven compressor, a condenser and an evaporator, and at least one of the first portion and the second portion including a set of power electronics connecting an electricity source to the corresponding electric compressor, the set of power electronics being configured to control power characteristics of power provided from the electricity source to the electric compressor.

Another example of the above described tractor trailer vehicle further includes an aerodynamic external skin covering at least one of the first portion and the second portion.

These and other features of the present invention can be best understood from the following specification and drawings, the following of which is a brief description.
Figure 1 illustrates an exemplary prior art tractor trailer configuration.
Figure 2 schematically illustrates an exemplary embodiment of a trailer including a rear mounted electric refrigeration unit.
Figure 3 schematically illustrates a top and rear view of the exemplary vehicle 100 of Figure 2.

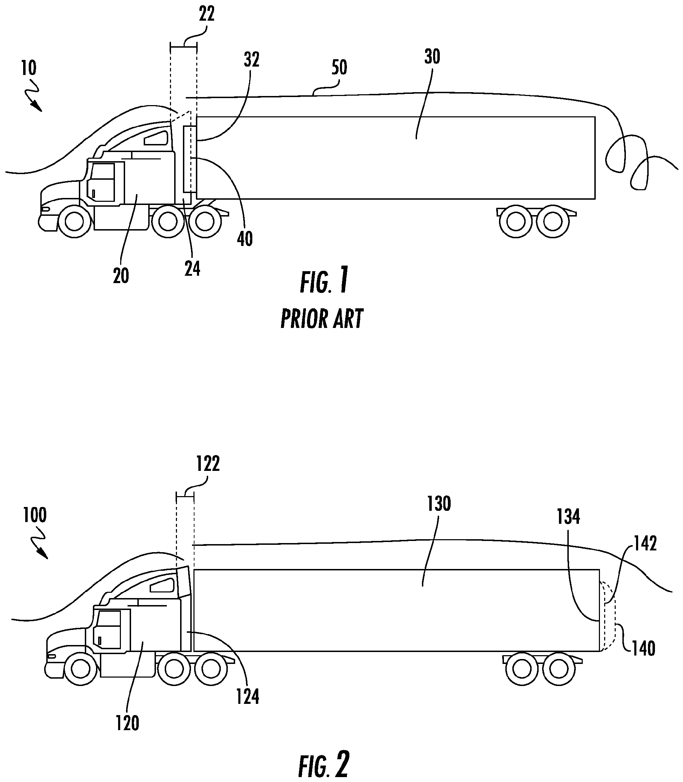

Figure 1 schematically illustrates an exemplary vehicle 10 including a tractor 20 configured to pull a trailer 30. The trailer 30 is a refrigerated trailer, and includes a refrigeration unit 40 mounted to a front end 32 of the trailer 30. The refrigeration unit 40 includes a diesel, or other fossil fuel, based power generation unit configured to provide operational power to the refrigeration unit 40. The refrigeration unit 40 refrigerates the trailer 30 during transportation of temperature sensitive goods.

Driving the vehicle 10 induces an airstream 50 that passes over the tractor 20 and the trailer 30 and causes drag on the vehicle 10. The drag, in turn, decreases the efficiency of the tractor 20 and increases fuel consumption during transportation. In order to reduce the inefficiencies associated with drag, a gap 22 between the tractor 20 and the trailer 30 is reduced in length, and aerodynamic flaps 24, referred to as fairings, are added extending from the tractor 20 toward the front of the trailer 30. However, the reduction of the gap 22 and the addition of the aerodynamic flaps 24 reduces the available space for the refrigeration unit 40 and can, in some examples, eliminate the feasibility of placing a conventional trailer refrigeration unit in the gap 22.

With continued reference to Figure 1, Figure 2 schematically illustrates an embodiment of a trailer 130 including a rear mounted refrigeration unit 140. The rear mounted refrigeration unit 140 is an electric refrigeration unit 140, and includes a battery configured to power the refrigeration systems. In alternative examples the rear mounted refrigeration unit 140 can include an electrical connection allowing the refrigeration unit 140 to connect to, and draw power from, an electric engine within the tractor 120 or any other source of electrical power on the vehicle 100. In yet further alternative examples, the rear mounted refrigeration unit 140 can include both a battery and an electrical connection to the tractor 120, with either the battery or the electrical connection operating as a backup configuration in case the primary configuration is damaged or otherwise unusable.

A frame 142 connects the refrigeration unit 140 to the rear end 134 of the trailer 130. As the refrigeration unit 140 is mounted to the rear end 134, a gap 122 between the trailer and the tractor 120 is substantially reduced relative to prior art systems, and aerodynamic flaps 124 can extend almost the entirety of the gap 122. By way of example, the gap 122 can be less than 109 cm (43 inches) in some configurations. In some examples, the frame 142 can be integrated with the rear doors of the trailer 130 such that a door latch is incorporated into the frame 142. In alternative examples, the frame 142 can be mounted to an existing door structure, and is configured such that the frame 142 does not interfere with the door latch system.

With continued reference to Figures 1 and 2, Figure 3 schematically illustrates a top and rear view of the vehicle 100 of Figure 2. Mounted to the rear of the vehicle 100 on doors 202 are two portions of a split refrigeration unit 140A, 140B. The portions of the split refrigeration unit 140A, 140B are mounted to the doors via the frame 142. In some examples, a latch 144 for the doors is independent of the frame 142 and the frame 142 is configured not to interfere with the door latch 144 and the opening of the door. In alternative examples, the frame 142 and the latch 144 are integrated, and the frame is built into the door structure.

Each portion of the split refrigeration unit 140A, 140B is substantial identical to the other portion. As used herein substantial identical refrigeration unit portions are portions that include the same general components in the same general layout, while allowing for minor constructional variations to accommodate a split rear door 202 structure. By way of example, the variations can include mirrored configurations, minor size differences, and the like.

Each of the rear mounted refrigeration portions in the split refrigeration unit 140A, 140B includes a condenser 210 with a condenser coil 211 and electric condenser fan 212 used to draw outside air through the condenser coil 211. The condenser coil 211 is a refrigerant heat rejection heat exchanger and is connected in refrigerant flow communication via a closed-loop circuit with the evaporator 220 (acting as a refrigerant heat absorption heat exchanger), electric compressor 230 and other components such as an expansion device, filter drier, receiver, liquid-suction heat exchanger and/or accumulator required as necessary to meeting operational needs. The evaporator 220 uses electric fan(s) to pass air drawn from the trailer cargo space via the return air input 214 which heats and evaporates the refrigerant thus cooling the air. The cooled air is then delivered to the trailer cargo space via the supply air output 216. An electric compressor 230 provides compression to the condenser 210 and evaporator 220 systems, and allows the split refrigeration unit 140A, 140B to function.

Each of the electric compressors 230, the electric condenser and the evaporator fans are electrically connected to an electrical energy storage unit 240, such as a battery, a super capacitor, or any other rechargeable electrical storage unit. In alternative examples, the electric compressor 230, the electric condenser and the evaporator fans can be connected to an interface 250, or incorporate the interface 250 within the electric compressor 230. The interface 250 allows a connection to the electrical systems of the tractor portion of the vehicle 100, and is configured to provide operational power to the split refrigeration unit 140A, 140B.

In yet further examples, the interface 250 and the electrical storage unit 240 can both be included, and power from the tractor can be used to both power the portions of the split refrigeration unit 140A, 140B, and to charge the electrical storage unit 240. Connected to the electrical storage unit 240 in the illustrated example is a set of power electronics 242. The power electronics 242 regulate the voltage and current provided from the electrical storage unit 240 or the interface 250 to the electric compressor 230, the electric condenser and the evaporator fans using any conventional power electronics configuration.

Also included in each portion of the split refrigeration unit 140A, 140B is a control box 260 which includes a controller 261, contactors, relays, fuses, and the like. The controller 261 is controllably coupled to each of the controlled elements of the refrigeration unit 140A, 140B, and provides the operational parameters and controls to the corresponding split refrigeration unit 140A, 140B. In alternative examples, a single controller 261 can be included in one of the portions of the split refrigeration unit 140A, 140B and provide controls to the components of both portions of the split refrigeration unit 140A, 140B. In such a configuration, the controller 261 would include a connection configured to be easily coupled and decoupled such that a driver, or other vehicle operator, could decouple the controller connection prior to opening the doors, and recouple the controller 261 upon closing the doors.

In yet further alternative examples, each portion of the split refrigeration unit 140A, 140B can include a corresponding controller 261, with the controllers 261 being interfaced together such that one of the controllers 261 can take control of the other portions of the split refrigeration unit 140A, 140B in the event that the other controller 261 fails. As with the single controller 261 example described above, this alternative would include a communication cable connecting the controllers 261 and being configured to easily disconnect and reconnect when the driver or operator of the vehciloe opens and closes the doors.

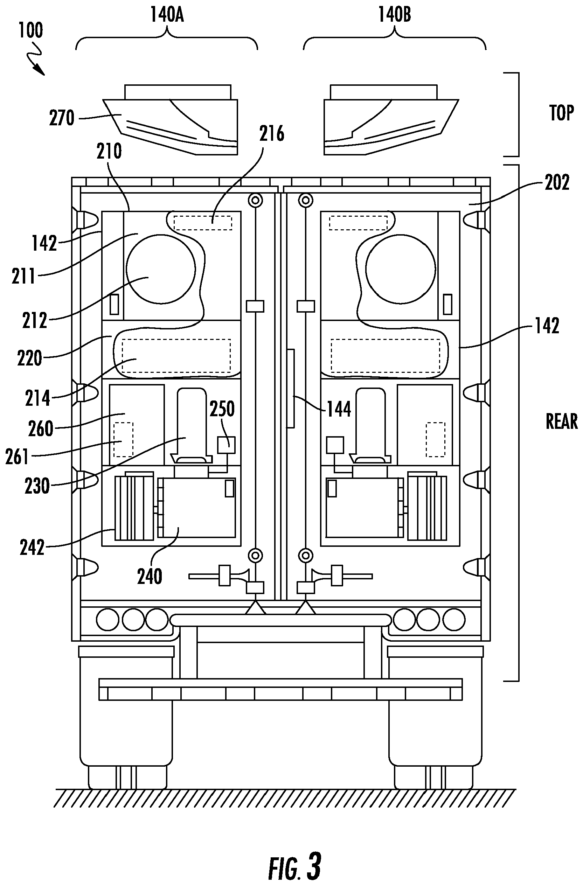

Referring now to the top view portion of Figure 3, each of the split refrigeration unit 140A, 140B is covered via a skin 270. The skin 270 encloses the components of the split refrigeration unit 140A, 140B and protects the split refrigeration unit 140A, 140B from environmental hazards such as road salt, mud, debris, as well as from environmental conditions like rain or snow. In addition to the protection provided, the skin 270 includes an aerodynamic profile that assists in reducing drag on the vehicle 100 during transportation. In some examples, the aerodynamic profile can be an angled planar shape. In other examples, the aerodynamic profile can include a hemispherical curved or teardrop shape encompassing the corresponding split refrigeration unit 140A, 140B components. In yet further examples, a hybrid of the angled planar shape and the teardrop shape can be utilized.

In the illustrated example, each of the portions of the split refrigeration unit 140A, 140B includes its own dedicated skin 270. In alternative examples, a single skin 270 can cover both portions. In such an example, the skin 270 is removably mounted to the frame 142, and is removed before the doors are opened.

During operation of the vehicle 100, each portion of the split refrigeration unit 140A, 140B provides cooling to the trailer 130. In some examples, the portions of the split refrigeration unit 140A, 140B are sized such that each unit 140A, 140B provides approximately half of the necessary cooling, and each portion of the split refrigeration unit 140A, 140B operates in conjunction with the other portion to provide full cooling. In alternative examples, each portion of the split refrigeration unit 140A, 140B is sized to provide sufficient refrigeration to refrigerate the trailer 130 without the assistance of the other portion of the split refrigeration unit 140A, 140B. In such examples, a first split refrigeration unit 140A operates in a refrigerating cycle discharging power from the corresponding electrical storage unit 240. Simultaneously, the second portion of the split refrigeration unit 140B operates in a charging cycle, utilizing electrical power from the tractor 120 to charge the electrical storage unit 240. When the electrical storage unit 240 of the first split refrigeration unit 140A falls below a threshold charge level, the first refrigeration transitions to a charging function, and signals the second refrigeration unit 140B to begin a refrigeration cycle. In another example, each unit 140A, 140B is in direct electrical communication with the tractor's power system (i.e. tractor battery or tractor energy storage) and the electrical storage unit 240 is omitted.

Although an embodiment of this invention has been disclosed, a worker of ordinary skill in this art would recognize that certain modifications would come within the scope of this invention, which is defined by the claims. For that reason, the following claims should be studied to determine the true scope and content of this invention.

## Claims

1. A split trailer refrigeration unit for a tractor trailer, the split refrigeration unit comprising:
a first portion (140A) including an electrically driven compressor (230), a condenser (210) and an evaporator (220), the first portion being sized to independently refrigerate the trailer (30);
a second portion (140B), the second portion including an electrically driven compressor (230), a condenser (210) and an evaporator (220), the second portion being sized to independently refrigerate the trailer;
both of the first portion and the second portion including a respective set of power electronics (242) connecting a respective electricity source (240) to the corresponding electric compressor, each set of power electronics being configured to control power characteristics of power provided from the electricity source to the electric compressor;
a frame (142) configured to structurally mount each of the first portion and the second portion to a rear trailer door (134); and
a controller (261) configured to operate the first portion in an electrical storage unit charging operation and the second portion in a refrigeration operation during a first mode, and configured to operate the second portion in the electrical storage unit charging operation and the first portion in the refrigeration operation during a second mode.

2. The split trailer refrigeration unit of claim 1, wherein each electricity source (240) is at least one of an electrical storage unit (240) and a power interface (250) connected to an external power source.

3. The split trailer refrigeration unit of claim 2, wherein each electricity source (240) includes both the electrical storage unit (240) and the power interface (250) connected to the external power source.

4. The split refrigeration unit of claim 1, comprising a trailer door (134) integral with the frame (142) and wherein a trailer door latch is a component of the frame.

5. The split refrigeration unit of claim 1, wherein the frame (142) is mountable to a trailer door (134) and distinct from the trailer door.

6. The split refrigeration unit of any preceding claim, wherein the controller (261) is configured to transition from the first mode to the second mode in response to the electrical storage unit (240) in the second portion (140B) falling below a charge threshold.

7. The split refrigeration unit of claim 1, further comprising an external skin (270) covering at least one of the first portion (140A) and the second portion (140B).

8. The split refrigeration unit of claim 7, wherein the external skin (270) comprises a first aerodynamic component covering the first portion (140A) and a second aerodynamic component covering the second portion (140B).

9. The split refrigeration unit of claim 7, wherein the external skin (270) has an aerodynamic profile including one of an angular planar configuration, hemispherical curved configuration and a teardrop configuration.

10. A tractor trailer vehicle comprising:
a tractor (20) including a plurality of fairings extending rearward from a rear end of the tractor;
a trailer (30) connected to the tractor, wherein a gap between the rear end of the tractor and a forward end of the trailer is less than 43 inches; and
a rear mounted refrigeration unit comprising a split refrigeration unit as defined in any preceding claim, being connected to a rear end (134) of the trailer via the frame (142).

11. The tractor trailer vehicle of claim 10, further comprising an aerodynamic external skin (270) covering at least one of the first portion (140A) and the second portion (140B).

12. A method for refrigerating a tractor trailer according to claim 10 comprising:
powering at least one portion of a rear mounted refrigeration unit (140) via an electrical power source and operating the at least one portion of a rear mounted refrigeration unit in a refrigeration mode, wherein powering the at least one portion of the rear mounted refrigeration unit comprises providing power to a first portion (140A) of the at least one portion during a first mode of operations and charging an electrical storage unit (240) of a second portion (140B) of the at least one portion during the first mode of operations;
providing power to the second portion (140B) of the at least one portion during a second mode of operations and charging an electrical storage unit (240) of the first portion (140A) of the at least one portion during the second mode of operations; and
transitioning from the first mode of operations to the second mode of operations, in response to an electrical storage unit (240) in the first portion falling below a threshold charge level.

13. The method of claim 12, wherein powering the at least one portion (140A, 140B) of the rear mounted refrigeration unit (140) via the electrical power source comprises simultaneously powering a first portion and a second portion of the rear mounted refrigeration unit via the electrical power source, wherein each of the first portion and the second portion are substantially identical.

## Patentansprüche

1. Split-Anhängerkühleinheit für einen Traktoranhänger, wobei die Split-Kühleinheit Folgendes umfasst:
einen ersten Abschnitt (140A), der einen elektrisch angetriebenen Kompressor (230), einen Kondensator (210) und einen Verdampfer (220) beinhaltet, wobei der erste Abschnitt bemessen ist, den Anhänger (30) unabhängig zu kühlen;
einen zweiten Abschnitt (140B), wobei der zweite Abschnitt einen elektrisch angetriebenen Kompressor (230), einen Kondensator (210) und einen Verdampfer (220) beinhaltet, wobei der zweite Abschnitt bemessen ist, den Anhänger unabhängig zu kühlen;
wobei sowohl der erste Abschnitt als auch der zweite Abschnitt einen jeweiligen Satz von Leistungselektronik (242) beinhalten, der eine jeweilige Elektrizitätsquelle (240) mit dem entsprechenden elektrischen Kompressor verbindet, wobei jeder Satz von Leistungselektronik dazu ausgelegt ist, Leistungseigenschaften von Leistung, die von der Elektrizitätsquelle an den elektrischen Kompressor bereitgestellt wird, zu steuern;
einen Rahmen (142), der dazu ausgelegt ist, sowohl den ersten Abschnitt als auch den zweiten Abschnitt strukturell an einer Anhängerhecktür (134) zu befestigen; und
eine Steuereinheit (261), die dazu ausgelegt ist, während eines ersten Modus den ersten Abschnitt in einem elektrischen Speichereinheitsladebetrieb und den zweiten Abschnitt in einem Kühlbetrieb zu betreiben, und dazu ausgelegt ist, während eines zweiten Modus den zweiten Abschnitt in dem elektrischen Speichereinheitsladebetrieb und den ersten Abschnitt in dem Kühlbetrieb zu betreiben.

2. Split-Anhängerkühleinheit nach Anspruch 1, wobei jede Elektrizitätsquelle (240) zumindest eine von einer elektrischen Speichereinheit (240) und einer Leistungsschnittstelle (250), die mit einer externen Leistungsquelle verbunden ist, ist.

3. Split-Anhängerkühleinheit nach Anspruch 2, wobei jede Elektrizitätsquelle (240) sowohl die elektrische Speichereinheit (240) als auch die Leistungsschnittstelle (250), die mit der externen Leistungsquelle verbunden ist, beinhaltet.

4. Split-Kühleinheit nach Anspruch 1, die eine Anhängertür (134) umfasst, die ganzheitlich mit dem Rahmen (142) ist, und wobei ein Anhängertürriegel eine Komponente des Rahmens ist.

5. Split-Kühleinheit nach Anspruch 1, wobei der Rahmen (142) an einer Anhängertür (134) befestigbar ist und sich von der Anhängertür unterscheidet.

6. Split-Kühleinheit nach einem vorstehenden Anspruch, wobei die Steuereinheit (261) dazu ausgelegt ist, von dem ersten Modus zu dem zweiten Modus in Reaktion darauf überzugehen, dass die elektrische Speichereinheit (240) in dem zweiten Abschnitt (140b) unter eine Ladungsschwelle fällt.

7. Split-Kühleinheit nach Anspruch 1, weiter umfassend eine Außenhaut (270), die zumindest einen des ersten Abschnitts (140A) und des zweiten Abschnitts (140B) abdeckt.

8. Split-Kühleinheit nach Anspruch 7, wobei die Außenhaut (270) eine erste aerodynamische Komponente, die den ersten Abschnitt (140A) abdeckt, und eine zweite aerodynamische Komponente, die den zweiten Abschnitt (140B) abdeckt, umfasst.

9. Split-Kühleinheit nach Anspruch 7, wobei die Außenhaut (270) ein aerodynamisches Profil aufweist, das eine von einer angewinkelten ebenen Ausbildung, halbkugelförmigen gekrümmten Ausbildung und einer tränenförmigen Ausbildung beinhaltet.

10. Traktoranhängerfahrzeug, umfassend:
einen Traktor (20), der eine Vielzahl von Verkleidungen beinhaltet, die sich von einem Hinterende des Traktors nach hinten erstrecken;
einen Anhänger (30), der mit dem Traktor verbunden ist, wobei ein Spalt zwischen dem Hinterende des Traktors und einem Vorderende des Anhängers geringer als 43 Inch ist; und
eine heckbefestigte Kühleinheit, die eine Split-Kühleinheit wie in einem vorstehenden Anspruch definiert umfasst, wobei sie mit einem Hinterende (134) des Anhängers mittels des Rahmens (142) verbunden ist.

11. Traktoranhängerfahrzeug nach Anspruch 10, weiter umfassend eine aerodynamische Außenhaut (270), die zumindest einen des ersten Abschnitts (140A) und des zweiten Abschnitts (140B) abdeckt.

12. Verfahren zum Kühlen eines Traktoranhängers nach Anspruch 10, umfassend:
Antreiben zumindest eines Abschnitts einer heckbefestigten Kühleinheit (140) mittels einer elektrischen Leistungsquelle und Betreiben des zumindest einen Abschnitts einer heckbefestigten Kühleinheit in einem Kühlmodus, wobei Antreiben des zumindest einen Abschnitts der heckbefestigten Kühleinheit umfasst, Leistung an einen ersten Abschnitt (140A) des zumindest einen Abschnitts während eines ersten Betriebsmodus bereitzustellen und eine elektrische Speichereinheit (240) eines zweiten Abschnitts (140B) des zumindest einen Abschnitts während des ersten Betriebsmodus zu laden;
Bereitstellen von Leistung an den zweiten Abschnitt (140B) des zumindest einen Abschnitts während eines zweiten Betriebsmodus und Laden einer elektrischen Speichereinheit (240) des ersten Abschnitts (140A) des zumindest einen Abschnitts während des zweiten Betriebsmodus; und
Übergehen von dem ersten Betriebsmodus zu dem zweiten Betriebsmodus in Reaktion darauf, dass eine elektrische Speichereinheit (240) in dem ersten Abschnitt unter einen Schwellenladungsstand fällt.

13. Verfahren nach Anspruch 12, wobei Antreiben des zumindest einen Abschnitts (140A, 140B) der heckbefestigten Kühleinheit (140) mittels der elektrischen Leistungsquelle umfasst, gleichzeitig einen ersten Abschnitt und einen zweiten Abschnitt der heckbefestigten Kühleinheit mittels der elektrischen Leistungsquelle anzutreiben, wobei der erste Abschnitt und der zweite Abschnitt jeweils im Wesentlichen identisch sind.

## Revendications

1. Unité de réfrigération de remorque divisée pour une remorque de tracteur, l'unité de réfrigération divisée comprenant :
une première partie (140A) incluant un compresseur entraîné électriquement (230), un condenseur (210) et un évaporateur (220), la première partie étant dimensionnée pour réfrigérer indépendamment la remorque (30) ;
une seconde partie (140B), la seconde partie incluant un compresseur entraîné électriquement (230), un condenseur (210) et un évaporateur (220), la seconde partie étant dimensionnée pour réfrigérer indépendamment la remorque ;
à la fois la première partie et la seconde partie incluant un ensemble respectif d'électronique de puissance (242) connectant une source d'électricité respective (240) au compresseur électrique correspondant, chaque ensemble d'électronique de puissance étant configuré pour commander des caractéristiques de puissance de la puissance fournie à partir de la source d'électricité au compresseur électrique ;
un cadre (142) configuré pour monter structurellement chacune de la première partie et de la seconde partie sur une porte arrière de remorque (134) ; et
un dispositif de commande (261) configuré pour faire fonctionner la première partie dans une opération de charge d'unité de stockage électrique et la deuxième partie dans une opération de réfrigération pendant un premier mode, et configuré pour faire fonctionner la deuxième partie dans l'opération de charge d'unité de stockage électrique et la première partie dans l'opération de réfrigération pendant un second mode.

2. Unité de réfrigération de remorque divisée selon la revendication 1, dans laquelle chaque source d'électricité (240) est au moins l'une d'une unité de stockage électrique (240) et d'une interface d'alimentation (250) connectée à une source d'alimentation externe.

3. Unité de réfrigération de remorque divisée selon la revendication 2, dans laquelle chaque source d'électricité (240) inclut à la fois l'unité de stockage électrique (240) et l'interface d'alimentation (250) connectées à la source d'alimentation externe.

4. Unité de réfrigération divisée selon la revendication 1, comprenant une porte de remorque (134) d'un seul tenant avec le cadre (142) et dans laquelle un verrou de porte de remorque est un composant du cadre.

5. Unité de réfrigération divisée selon la revendication 1, dans laquelle le cadre (142) peut être monté sur une porte de remorque (134) et être distinct de la porte de remorque.

6. Unité de réfrigération divisée selon l'une quelconque des revendications précédentes, dans laquelle le dispositif de commande (261) est configuré pour passer du premier mode au second mode en réponse à l'unité de stockage électrique (240) dans la seconde partie (140B) tombant en dessous d'un seuil de charge.

7. Unité de réfrigération divisée selon la revendication 1, comprenant en outre une peau externe (270) recouvrant au moins une de la première partie (140A) et de la seconde partie (140B).

8. Unité de réfrigération divisée selon la revendication 7, dans laquelle la peau externe (270) comprend un premier composant aérodynamique recouvrant la première partie (140A) et un second composant aérodynamique recouvrant la seconde partie (140B).

9. Unité de réfrigération divisée selon la revendication 7, dans laquelle la peau externe (270) présente un profil aérodynamique incluant une d'une configuration angulaire plane, d'une configuration hémisphérique incurvée et d'une configuration en forme de goutte d'eau.

10. Véhicule à remorque de tracteur comprenant :
un tracteur (20) incluant une pluralité de carénages s'étendant vers l'arrière à partir d'une extrémité arrière du tracteur ;
une remorque (30) connectée au tracteur, dans lequel un espace entre l'extrémité arrière du tracteur et une extrémité avant de la remorque est inférieur à 43 pouces ; et
une unité de réfrigération montée à l'arrière comprenant une unité de réfrigération divisée selon l'une quelconque des revendications précédentes, étant connectée à une extrémité arrière (134) de la remorque via le cadre (142).

11. Véhicule à remorque de tracteur selon la revendication 10, comprenant en outre une peau externe aérodynamique (270) recouvrant au moins une de la première partie (140A) et de la seconde partie (140B).

12. Procédé de réfrigération d'une remorque de tracteur selon la revendication 10 comprenant les étapes consistant à :
alimenter au moins une partie d'une unité de réfrigération montée à l'arrière (140) via une source d'alimentation électrique et faire fonctionner la au moins une partie d'une unité de réfrigération montée à l'arrière dans un mode de réfrigération, dans lequel l'alimentation de la au moins une partie de l'unité de réfrigération montée à l'arrière comprend une fourniture de puissance à une première partie (140A) de la au moins une partie pendant un premier mode de fonctionnement et une charge d'une unité de stockage électrique (240) d'une seconde partie (140B) de la au moins une partie pendant le premier mode de fonctionnement ;
alimenter la seconde partie (140B) de la au moins une partie pendant un second mode de fonctionnement et charger une unité de stockage électrique (240) de la première partie (140A) de la au moins une partie pendant le second mode de fonctionnement ; et
effectuer une transition du premier mode de fonctionnement au second mode de fonctionnement, en réponse à une unité de stockage électrique (240) dans la première partie tombant en dessous d'un niveau de charge de seuil.

13. Procédé selon la revendication 12, dans lequel l'alimentation de la au moins une partie (140A, 140B) de l'unité de réfrigération montée à l'arrière (140) via la source d'alimentation électrique comprend une alimentation simultanée d'une première partie et d'une seconde partie de l'unité de réfrigération montée à l'arrière via la source d'alimentation électrique, dans lequel chacune de la première partie et de la seconde partie est sensiblement identique.
